# FASCICULE DE BREVET EUROPEEN

(11) **EP 2 510 059 B1**
(45) Date de publication et mention de la délivrance du brevet: **20.03.2019**
(21) Numéro de dépôt: 10810871.3
(22) Date de dépôt: 01.12.2010
(51) Int. Cl.: C09C 1/02, C09C 1/36, C09C 1/40, B02C 23/00, C01F 11/18

(54) **UTILISATION DE FORMULES CONTENANT DU GLYCÉROL COMME AGENT D'AIDE AU BROYAGE À SEC DE MATIÈRES MINÉRALES**
VERWENDUNG VOM GLYCEROLHALTIGEN FORMULIERUNGEN ALS HILFSMITTEL ZUR TROCKENMAHLUNG VON MINERALMATERIALIEN
USE OF GLYCEROL-CONTAINING FORMULAS AS AGENTS FOR ASSISTING THE DRY GRINDING OF MINERAL MATERIALS

(30) Priorité: 07.12.2009 FR 0958685
(43) Date de publication de la demande: 17.10.2012
(73) Titulaire: COATEX, 69730 Genay (FR)
(72) Inventeur: GUILLOT, Murielle, F-69300 Caluire et Cuire (FR); MONGOIN, Jacques, F-69650 Quincieux (FR); GUERRET, Olivier, 46170 PERN (FR)
(74) Mandataire: Regimbeau
(86) Numéro de dépôt international: PCT/IB2010/003074
(87) Numéro de publication internationale: WO 2011/070416

(56) Documents cités:
- WO-A1-2006/100510
- WO-A2-2007/109328
- FR-A1- 2 896 171
- PARAMASIVAM R ET AL: "EFFECTS OF THE PHYSICAL PROPERTIES OF LIQUID ADDITIVES ON DRY GRINDING", POWDER TECHNOLOGY, ELSEVIER SEQUOIA, LAUSANNE, CH LNKD- DOI:10.1016/0032-5910(92)85052-W, vol. 70, no. 1, 1 janvier 1992 (1992-01-01), pages 43-50, XP000319358, ISSN: 0032-5910
- H. TAKAHASHI: "wet grinding on kaolin minerals", BULLETIN OF THE CHEMICAL SOCIETY OF JAPAN, vol. 32, no. 4, 1959, pages 381-387, XP002583734,

## Description

Proposer des produits dont la synthèse ne repose plus sur des matières premières issues d'une énergie fossile, est aujourd'hui un enjeu majeur pour l'industrie chimique. Cette démarche s'inscrit dans la réduction du taux de composés organiques volatils (COV) telle que définie par le protocole de Kyoto, et de manière plus générale dans les concepts de « chimie verte » et de « développement durable ».

L'industrie minéralière est une grande consommatrice de produits chimiques. Ceux-ci sont utilisés dans les différentes étapes de transformation/modification/traitement que subissent les matières minérales. Le broyage à sec des matières minérales, dont le carbonate de calcium naturel représente un exemple privilégié de part ses multiples utilisations, constitue l'une de ces étapes.

Il résulte d'une première opération de « broyage » proprement dite, conduisant à une réduction de taille des particules consécutive aux impacts interparticulaires ou à des impacts additionnels avec d'autres matériaux tels que des billes de broyage. Il comprend une deuxième étape dite de « sélection » visant à classer les particules en fonction de leur taille, et notamment à réinjecter dans le broyeur les particules qui n'ont pas encore atteint la finesse souhaitée.

Ce broyage est réalisé en présence d'agents dits « d'aide au broyage », dont la fonction est de faciliter l'action mécanique du broyage telle que décrite ci-dessus. Introduits pendant l'étape de broyage, on les retrouve au niveau de l'étape de sélection. Ils sont présentés de manière très générale dans les documents « Calcium Carbonate » (Birkhâuser Verlag, 2001) et « Beitrag zur Aufklärung der Wirkungsweise von Mahlhilfsmitteln » (Freiberger Forschungshefte, VEB Deutscher Verlag für Grundstoffindustrie, Leipzig, Germany, 1975).

L'art antérieur est particulièrement riche au sujet de tels additifs, qu'on peut classer en 3 catégories : les acides faibles de Brönstedt, les bases faibles de Brönstedt et les bases de Lewis. Le premier groupe dédié aux acides faibles de Brönstedt, contient notamment les acides formique, acétique, lactique, lignitique, adipique, lactique, les acides gras et en particulier les acides palmitique et stéarique, mais aussi certains sels de ces acides comme les sels de lignine sulfonate. On en trouve des illustrations dans les documents WO 2005 / 063399 et FR 2 203 670.

Le deuxième groupe est constitué par les bases faibles de Brönstedt ; il inclut notamment des alcanolamines, dont la TIPA (tri isopropanol amine) et la TEA (tri éthanol amine) bien connues de l'homme du métier. On pourra à cet égard se reporter aux documents EP 0 510 890 et GB 2 179 268.

Les bases de Lewis constituent le troisième groupe d'agents d'aide au broyage à sec, et contiennent des alcools. Il s'agit de l'éthylène glycol, du diéthylène glycol, du triéthylène glycol, du propylène glycol et du dipropylène glycol. Les documents WO 2002 / 081 573 et US 2003 / 019 399 décrivent par exemple l'usage de diéthylène glycol comme agent d'aide au broyage à sec dans leur tableau 1. Le document WO 2005 / 071 003 fait référence à un alcool polyhydrique, correspondant à l'éthylène glycol. Le document WO 2005 / 026 252 décrit un agent d'aide au broyage à sec pouvant être une triéthanolamine, un polypropylène glycol ou un éthylène glycol. Enfin, le document WO 2007 / 138410 propose de mettre en oeuvre des polyalkylène glycols de bas poids moléculaire.

Force est de reconnaître qu'aujourd'hui encore, ces produits à base de glycol sont les plus utilisés pour le broyage à sec du carbonate de calcium naturel, dont le propylène glycol (ou monopropylène glycol) est le plus répandu. Ces additifs sont en effet réputés pour leur efficacité à faciliter les phénomènes de broyage, et pour leur faible coût ; ceci est justement rapporté dans le document WO 2007 / 138410 cité plus haut.

Toutefois, de tels produits ne sont pas exempts de COV. Par voie de conséquence, le carbonate de calcium broyé avec ces additifs est lui-même porteur de COV, une partie de l'agent d'aide au broyage demeurant fixée/absorbée à la surface de la particule minérale. Cette teneur en COV constitue une barrière à la mise en oeuvre de tels carbonates de calcium dans des applications où la réglementation ne tolère plus aucun composé organique volatil.

Les documents WO 2006 / 132 762 et WO 2007 / 109 328 ont proposé il y a peu de temps un nouvel agent d'aide au broyage à sec : le glycérol. Ce produit est issu de la transformation d'huiles végétales ou animales (saponification, trans-esterification et synthèse d'acide gras). Il s'agit d'une ressource renouvelable, naturelle et disponible en grande quantité. Elle représente une alternative sans COV, tout à fait avantageuse d'un point de vue environnemental et de la préservation de nos ressources naturelles, ce qui n'est notamment pas permis avec les polyéthylène-glycols (PEG) tous issus de voie de synthèse.

Ces deux derniers documents sont essentiellement axés sur le broyage à sec du ciment ; il s'agit d'un procédé conduisant à un broyage « grossier », au sens où les tailles de particules finales (diamètre médian) se situent entre 20 et 100 µm, alors qu'elles sont de l'ordre du micron pour le carbonate de calcium. Il est donc impensable de transférer l'enseignement relatif au broyage à sec du ciment, à un procédé de broyage à sec du carbonate de calcium : ce dernier vise à atteindre la limite basse du broyage ultra-fin (1 µm) pour laquelle il faut dépenser environ 10 fois plus d'énergie que pour un ciment par tonne sèche de matière minérale broyée (Rumpf, 1975).

De plus, si ces 2 documents parlent clairement « d'amélioration » du broyage en présence de glycérol, ils n'expliquent pas en quoi consiste cette dernière et surtout, par rapport à quelle référence on atteste de cette « amélioration ». Enfin, aucun essai ne vient soutenir la description et les inventions revendiquées dans ces deux documents : on ne peut donc saisir « l'effet technique » apporté par les produits revendiqués.

De même le document US 4,204,877 relatif à l'utilisation de poly-glycérol dans le broyage des ciments hydrauliques ou « clinkers » ne donne aucun enseignement transférable au carbonate de calcium. Le document "Effects of the physical grinding properties of liquid additives on dry grinding" par Paramasivam et al. dans Powder Technology, Vol 70, No.1, 1992 décrit un procédé de broyage à sec de calcite en présence de différents aides au broyage parmi lesquels un mélange de glycérol et un autre additif est cité sans donner aucune indications sur l'effet qu'ils peuvent avoir sur l'énergie de broyage mais afin d'agir sur la surface spécifique et la granulométrie.

Poursuivant ses recherches en vue de fournir un agent d'aide au broyage à sec pour matière minérale et notamment pour le carbonate de calcium naturel, la Demanderesse a su identifier que l'utilisation de formulations contenant du glycérol ou du poly-glycérol s'avérait particulièrement avantageuse, car plus efficace que le propylène glycol en vue d'augmenter la capacité de broyage et de diminuer la consommation d'énergie de broyage (énergie de broyage proprement dit, mais aussi énergie de classification) spécifique pour obtenir une granulométrie donnée.

Cette nouvelle utilisation est d'autant plus surprenante que la publication intitulée « Use of a nanoindentation fatigue test to characterise the ductile-brittle transition » (Journal of the European Ceramic Society (2009), 29(6), pp 1021-1028) apprend à l'homme du métier que lorsque le carbonate de calcium est de petite taille, et notamment de l'ordre du micron, le broyage engendre une compétition entre les déformations plastiques de la matière et les fractures, ces dernières étant nécessaires afin de réduire les tailles de particules. Les fractures étant favorisées lorsqu'une matière est dite « fragile », l'homme du métier chargé de broyer un carbonate de calcium finement cherchera des additifs qui assistent à sa fragilisation. Or, la publication intitulée « Hardness reduction through wetting » des auteurs R. W. Heinz et N. Street (Technical Note, Society of Mining Engineering, June 1964, pages 223-224) indique clairement dans le Tableau 1 que le glycérol décroît significativement la dureté du calcaire.

De plus, l'emploi du glycérol présente l'avantage également inattendu de ne pas réagir avec le CaO et Ca(OH)₂ dont la Demanderesse estime qu'ils se forment à la surface du matériau carbonaté aboutissant à ce que cet agent de broyage à sec utilisé selon l'invention ne change pas de couleur. De fait, il n'engendre aucune -ou un minimum decoloration jaune du carbonate de calcium avec lequel il est broyé, alors qu'un jaunissement apparaît dans le cas du broyage avec le monopropylène glycol (MPG).

Par énergie de broyage spécifique, on désigne la quantité d'énergie totale exprimée en kWh et nécessaire pour broyer une tonne de carbonate de calcium sec. Par capacité de broyage, on désigne la masse de carbonate de calcium sec broyé par heure. Il est entendu que ces 2 grandeurs sont déterminées, dans le cadre de l'invention, « aux bornes » du procédé global de broyage à sec du carbonate de calcium : c'est-à-dire en intégrant les 2 étapes de broyage proprement dit puis de sélection. Une des originalités de la présente invention est précisément de prendre en compte l'étape de classification, souvent négligée lorsqu'on aborde les phénomènes de broyage de matières minérales.

La granulométrie renvoie quant-à-elle au diamètre médian d50 (µm) déterminé par un appareil Sedigraph™ 5100 commercialisé par la société MICROMERITICS™ alors que la surface spécifique (m²/g) est mesurée selon la méthode BET bien connue de l'homme du métier.

Selon la présente invention, la Demanderesse entend par un broyage à sec, un broyage dans une unité de broyage ayant une quantité d'eau inférieure à 10% en poids sec dudit matériau dans ladite unité de broyage.

Rien dans l'état de la technique -et notamment dans les documents WO 2006 / 132 762 et WO 2007 / 109 328- ne divulguait ou ne laissait suggérer que des formulations contenant du glycérol,
- par rapport au monopropylène glycol (MPG) ou au polyéthylène glycol (PEG) qui constituent la référence du marché conforme aux nécessités de limiter les COV, notamment en terme d'efficacité de broyage du carbonate de calcium,
- utilisé en même quantité, au cours d'un procédé de broyage à sec du carbonate de calcium,
conduisaient à une diminution de l'énergie de broyage spécifique et à une augmentation de la capacité de broyage (ces 2 grandeurs étant déterminées en prenant en compte les 2 étapes du broyage proprement dit et de la sélection), en vue d'obtenir une granulométrie donnée et de l'ordre de 1 µm (c'est à dire un diamètre médian d50 bien inférieur à celui obtenu pour le broyage à sec du ciment).

Un premier objet de l'invention consiste donc en l'utilisation, comme agent d'aide au broyage à sec d'une matière minérale choisie parmi les dolomies, le talc, le dioxyde de titane, l'alumine, le kaolin et le carbonate de calcium ayant la fonction de diminuer l'énergie de broyage spécifique et d'augmenter la capacité de broyage, de formulations consistant en :
(i) glycérol, sous forme aqueuse ou pure, ou
(ii) en glycérol avec un ou plusieurs des agents suivants : l'éthylène glycol, le mono-propylène glycol, le triéthylène glycol, un acide inorganique ou un sel d'acide inorganique, l'acide formique ou citrique ou un sel d'acide formique ou citrique, un polyacide organique ou un sel de polyacide organique, une alcanolamine, une polyéthylèneimine, un polymère polyalkylène glycol de masse moléculaire en poids comprise entre 200 g/mole et 20000 g/mole préférentiellement entre 600 g/mole et 6000 g/mole, un glucide ayant une racine moyenne au carré du rayon de giration égale ou inférieure au rayon modal de la matière minérale, un ou plusieurs poly-glycérols, le lesdits agents étant sous forme aqueuse ou pure, ou,
(iii) un ou plusieurs poly-glycérols sous forme aqueuse ou pure;
et on met en oeuvre de 100 à 5000 ppm de glycérol ou de poly-glycérol, par rapport au poids sec de ladite matière minérale.

L'expression sous forme pure signifie que la formulation contenant le produit en question, ne contient aucun autre produit.

Une autre caractéristique de cette utilisation réside en ce que l'indice de couleur Gardner de l'agent d'aide au broyage à sec a une valeur inférieure à 3 mesurée selon la méthode Gardner DIN ISO4630/ASTM D 1544 68 exprimée dans une échelle allant de 1 (incolore) à 20 (marron très foncé).

Cette utilisation permet d'éviter aussi le jaunissement du produit broyé et mène notamment à un produit broyé ayant une évolution de degré de blancheur de moins de 1% par rapport au degré de blancheur initial mesuré selon la norme TAPPI T452 ISO2470. Cette utilisation peut être déclinée en 5 variantes, selon la forme et la nature de l'agent d'aide au broyage :
- première variante : du glycérol sous forme pure
- deuxième variante : du glycérol en formulation aqueuse
- troisième variante : du glycérol en combinaison avec au moins un des composés énoncé au point (ii), sous forme aqueuse ou pure
- quatrième variante : au moins un poly-glycérol sous forme pure
- cinquième variante : au moins un poly-glycérol en formulation aqueuse.

Dans une première variante, cette utilisation est aussi caractérisée en ce que lesdites formulations consistent en du glycérol sous forme pure.

Dans une deuxième variante, cette utilisation est aussi caractérisée en ce que lesdites formulations consistent en eau et glycérol.

Selon cette deuxième variante, cette utilisation est aussi caractérisée en ce que lesdites formulations contiennent de 25 % à 95 %, préférentiellement de 45 % à 90 %, très préférentiellement de 75 % à 85 % en poids de glycérol par rapport à leur poids total, le complément étant constitué par l'eau.

Dans une troisième variante, cette utilisation est aussi caractérisée en ce que lesdites formulations consistent en glycérol avec un ou plusieurs desdits agents, sous forme aqueuse ou pure.

Selon cette troisième variante, cette utilisation est aussi caractérisée en ce que ledit acide inorganique est un acide phosphorique.

Selon cette troisième variante, cette utilisation est aussi caractérisée en ce que ledit sel d'acide inorganique est un sel mono-, di- ou tri-alcalin, et préférentiellement est un sel de cation du Groupe I ou II du Tableau Périodique des Eléments.

Selon cette troisième variante, cette utilisation est aussi caractérisée en ce que ledit sel d'acide formique ou citrique est un sel mono-, di- ou tri-alcalin, et préférentiellement est un sel de cation du Groupe I ou II du Tableau Périodique des Eléments.

Selon cette troisième variante, cette utilisation est aussi caractérisée en ce que ledit polyacide organique est de formule COOH-(CH₂)ₙ-COOH, ou n est un entier de valeur entre 0 et 7, inclusif, ou est un sel mono- ou di-alcalin du polyacide organique de formule COOH-(CH₂)n-COOH, ou n est égal à un entier de valeur entre 0 et 7 inclusif, ou est un polyacide organique polymérique d'un ou plusieurs des monomères suivants, sous forme acide ou partiellement ou entièrement neutralisé avec un ou plusieurs cations du Groupe I ou II du Tableau Périodique des Eléments: acrylique, méthacrylique, maléique ou itaconique, et préférentiellement est un acide oxalique, un acide pimélique, ou un acide adipique.

Selon cette troisième variante, cette utilisation est aussi caractérisée en ce que ladite alcanolamine est choisie parmi le 2-amino-2-méthyle-1-propanol, le 2-amino-2-ethyle-1,3-propanediol, la tri-éthanolamine, la N-butyldiéthanolamine et la tri-iso-propanolamine, neutralisées ou non, et est préférentiellement choisie parmi leurs formes neutralisées au moyen d'un sel d'acide formique ou citrique ou d'un sel de polyacide organique.

Selon cette troisième variante, cette utilisation est aussi caractérisée en ce que ledit polymère polyalkylène glycol est un polyéthylène glycol, un polypropylène glycol, ou un copolymère éthylène-propylène glycol, aléatoire ou bloc.

Selon cette troisième variante, cette utilisation est aussi caractérisée en ce que ledit glucide ayant une racine moyenne au carré du rayon de giration dudit glucide égale ou inférieure au rayon modal de la matière minérale est le glucose, le fructose, le sucrose, l'amidon ou la cellulose, et préférentiellement est le sucrose.

Selon cette troisième variante, cette utilisation est aussi caractérisée en ce que le ou les poly-glycérols sont choisis parmi le di-glycérol, tri- glycérol, tétra- glycérol, penta-glycérol, hexa-glycérol, hepta-glycérol, octa-glycérol, nona-glycérol et déca-glycérol et leurs mélanges et préférentiellement parmi le di- et tri-glycérol.

Selon cette troisième variante, cette utilisation est aussi caractérisée en ce que lesdites formulations contiennent de 20 % à 95 % en poids de glycérol, de 1 % à 50 % en poids dudit agent et de 0 % à 65 % en poids d'eau, préférentiellement de 30 % à 90 % en poids de glycérol, de 10 % à 45 % en poids dudit agent et de 0 % à 60 % en poids d'eau, très préférentiellement de 35 % à 75 % en poids de glycérol, de 30 % à 40 % en poids dudit agent et de 5 % à 50 % en poids d'eau par rapport à leur poids total, la somme des pourcentages en poids de glycérol, dudit agent et d'eau étant à chaque fois égale à 100 %.

Selon une quatrième variante, cette utilisation est caractérisée en ce que lesdites formulations consistent en un ou plusieurs poly-glycérols sous forme pure.

Selon cette quatrième variante, cette utilisation est aussi caractérisée en ce que le ou les poly-glycérols sont choisis parmi le di-glycérol, tri- glycérol, tétra- glycérol, penta-glycérol, hexa-glycérol, hepta-glycérol, octa-glycérol , nona-glycérol et déca-glycérol et leurs mélanges et préférentiellement parmi le di- et tri-glycérol.

Selon une cinquième variante, cette utilisation est aussi caractérisée en ce que lesdites formulations consistent en eau et un ou plusieurs poly-glycérols.

Selon cette cinquième variante, cette utilisation est aussi caractérisée en ce que lesdites formulations contiennent de 25 % à 95 %, préférentiellement de 45 % à 90 %, très préférentiellement de 75 % à 85 % en poids de poly-glycérols par rapport à leur poids total, le complément étant constitué par l'eau.

Selon cette cinquième variante, cette utilisation est aussi caractérisée en ce que le ou les poly-glycérols sont choisis parmi le di-glycérol, tri- glycérol, tétra- glycérol, penta-glycérol, hexa-glycérol, hepta-glycérol, octa-glycérol , nona-glycérol et déca-glycérol et leurs mélanges et préférentiellement parmi le di- et tri-glycérol.

De manière générale, cette utilisation est aussi caractérisée en ce qu'on met en oeuvre, préférentiellement de 500 à 3 000 ppm de glycérol ou poly-glycérol, par rapport au poids sec de ladite matière minérale.

De manière générale, cette utilisation est aussi caractérisée en ce qu'on met en oeuvre entre 0,1 et 1 mg, et préférentiellement entre 0,2 et 0,6 mg, équivalent sec total dudit glycérol ou poly-glycérol et tout éventuel agent par m² de matière minérale.

De manière générale, cette utilisation est aussi caractérisée en ce que ladite matière minérale est broyée jusqu'à un diamètre moyen, mesuré par un Sedigraph™ 5100, compris entre 0,5 et 10 µm, préférentiellement entre 1 µm et 5 µm.

De manière générale, cette utilisation est aussi caractérisée en ce que ladite matière minérale est broyée jusqu'à obtenir un pourcentage en poids de particules ayant un diamètre inférieur à 2 µm, mesuré par un Sedigraph™ 5100, compris entre 20 % et 90 %, préférentiellement entre 30 % et 60 %.

De manière générale, cette utilisation est aussi caractérisée en ce que ladite matière minérale est un carbonate de calcium naturel.

Les exemples qui suivent permettront de mieux comprendre l'invention, sans toutefois en limiter la portée.

### EXEMPLES

### Exemple 1

Cet exemple est relatif au broyage à sec d'un carbonate de calcium naturel qui est un marbre de Carrare. Le broyage est réalisé au moyen d'une installation équipée d'un broyeur à boulet et d'un classificateur.

Il illustre l'amélioration de la capacité de production (exprimée en tonne de minéral sec broyé par heure) et de l'énergie spécifique de broyage mise en oeuvre, dans le cas d'un agent de broyage à sec qui est le glycérol, comparativement à deux agents d'aide au broyage de l'art antérieur qui sont un monopropylène glycol et un polyéthylène glycol.

La distribution de tailles des particules du carbonate de calcium initial alimentant le broyeur, obtenu par pré-broyage dans un broyeur à marteau, est donnée dans le tableau 1.

**Tableau 1**

| **Diamètre des particules (mm)** | **% massique** |
|---|---|
| 4 - 2,5 | 7,25 |
| 2,5 - 1,6 | 9,73 |
| 1,6 - 0,8 | 11,44 |
| 0,8 - 0,5 | 5,57 |
| 0,5 - 0,2 | 23,73 |
| 0,2 - 0,1 | 23,18 |
| < 0,1 | 19,1 |

Le marbre de Carrare a été introduit dans un broyeur à boulets de 5,7m³ utilisant 8 tonnes de billes de broyage en fer Cylpeb™, en forme de cylindres, ayant un diamètre moyen de 16 mm, en vue d'obtenir un matériau broyé :
- ayant un diamètre médian inférieur ou égal à 1,8 µm,
- dont 55 % en poids des particules ont un diamètre inférieur ou égal à 2 µm.

Le broyage à sec est réalisé de manière continue.

En sortie de la chambre de broyage, le matériau broyé est mené jusqu'à un classificateur de type SELEX™ 6S. Sa vitesse de rotation et son débit d'air sont respectivement réglés à 5200 tours/min et 6000 m³/h de façon à sélectionner la fraction de particules ayant un diamètre moyen inférieur ou égal à une valeur donnée et qui constituera le produit fini ; la fraction de particules restantes ayant un diamètre moyen supérieur à cette valeur est réintroduite dans le broyeur à boulets.

Le broyage est réalisé de telle manière à ce que le débit d'alimentation du sélecteur soit toujours égal à 4 tonnes/h et à ce que la quantité de produit frais injecté dans le broyeur à boulets corresponde à la quantité de produit sélectionné quittant le système.

Après le démarrage du système et avant d'enregistrer les résultats qui sont indiqués ci-dessous, on fait fonctionner le système jusqu'à obtenir des valeurs stables pour la quantité de matériau broyé, la capacité de broyage et l'énergie de broyage.

Les agents d'aide au broyage à sec ont été introduits dans le système de broyage au niveau du point d'introduction du matériau frais de manière à maintenir une quantité constante d'agent d'aide au broyage par rapport au matériau frais introduit à broyer.

**Tableau 2**

| Essai n° | 1 Art antérieur | 2 Art antérieur | 3 Invention | 4 Invention |
|---|---|---|---|---|
| Type d'agent d'aide au broyage | MPG | PEG | Glycérol | Glycérol + H3PO4 |
| Capacité de production (tonnes/h) | 0,68 | 0,65 | 0,70 | 0,68 |
| Energie spécifique de broyage (kWh/t) | 106 | 112 | 103 | 106 |
| Energie spécifique de classification (kWh/t) | 166 | 172 | 160 | 171 |
| Energie spécifique globale (kWh/t) | 271 | 284 | 263 | 277 |
| % de particules de diamètre < 2µm | 57 | 57 | 57 | 58 |
| % de particules de diamètre < 1 µm | 22 | 21 | 23 | 23 |
| d50 (µm) | 1,8 | 1,8 | 1,7 | 1,7 |
| Surface spécifique BET (m²/g) | 6,3 | 6,9 | 6,9 | 7,2 |
| Indice de jaune Gardner | 5 | 1 à 2 | 1 à 2 | 1 à 2 |

Les agents d'aide au broyage référencés MPG consistent en solution aqueuse contenant 75 % (massique) de monopropylène glycol et ont été obtenus auprès de la société FLUKA™.

Les agents d'aide au broyage référencés EG consistent en éthylène glycol, et ont été obtenus auprès de la société FLUKA™.

Les agents d'aide au broyage référencés PEG consistent en solution aqueuse contenant 75 % (massique) de polyéthylène glycol de masse moléculaire en poids égale à 600 g/mole et ont été obtenus auprès de la société FLUKA™.

Glycérol désigne une solution aqueuse contenant 75 % (massique) de glycérol.

Glycérol + H3PO4 désigne une solution aqueuse contenant 75 % (massique) d'un mélange (99 / 1 massique) Glycérol / acide phosphorique.

Chacun des essais met en oeuvre 2000 ppm de produit actif (soit 2667 ppm de chaque solution aqueuse).

L'indice de jaune Gardner de l'agent de broyage est mesuré selon la norme DIN ISO 4630 / ASTM D 1544 68 et la valeur est exprimée dans une échelle allant de 1 (incolore) à 20 (marron très foncé), la valeur 1 à 2 signifiant quasiment incolore, la valeur 5 signifiant une couleur jaune 5 alors qu'une valeur 11 signifie une couleur marron.

Toutes choses étant égales par ailleurs, plus l'indice de jaune Gardner est faible pour l'agent d'aide au broyage, moins important sera le jaunissement final observé au niveau du carbonate de calcium après broyage. On constate d'ores et déjà que l'essai 1 qui met en oeuvre du monopropylène glycol, fait état d'une valeur très élevée pour l'indice Gardner : par rapport au seul problème du jaunissement, on lui préfèrera donc les agents d'aide au broyage mis en oeuvre dans les autres essais.

Les seuls agents d'aide au broyage « acceptables » étant ceux correspondant aux essais 2, 3 et 4, on doit alors examiner leurs performances. Il apparaît que les meilleurs résultats sont obtenus pour les essais 3 et 4 : augmentation de la capacité de production, diminution de l'énergie spécifique de broyage, diminution de l'énergie spécifique de classification et ce, pour des particules plus fines que selon l'art antérieur (diminution du d50).

En résumé, seuls les polymères selon l'invention permettent une réduction du jaunissement, tout en remplissant les fonctions suivantes au niveau du procédé de broyage :
- amélioration de la capacité de production,
- diminution de l'énergie (à la fois de broyage, mais aussi de classification) de production,
et ce, en vue d'obtenir un grade fin de carbonate de calcium.

On a complété les essais précédents par 4 autres essais illustrant l'invention, mettant en oeuvre du glycérol avec du polyéthylène glycol et un polyglycérol et 2 polyglycérols (essai n° 5, 6, 7 et 8 respectivement).

On a conduit les essais de la même manière que précédemment, et déterminé les mêmes paramètres.

Les résultats correspondant figurent dans le tableau 3.

**Tableau 3**

| Essai n° | 5 Invention | 6 Invention | 7 Invention | 8 Invention |
|---|---|---|---|---|
| Type d'agent d'aide au broyage | Glycérol + PEG | Glycérol + polyglycérol 1 | Polyglycérol 1 | Polyglycérol 2 |
| Capacité de production (tonnes/h) | 0,70 | 0,71 | 0,72 | 0,72 |
| Energie spécifique de broyage (kWh/t) | 104 | 102 | 100 | 99 |
| Energie spécifique de classification (kWh/t) | 165 | 160 | 158 | 157 |
| Energie spécifique globale (kWh/t) | 269 | 262 | 258 | 256 |
| % de particules de diamètre < 2µm | 57 | 57 | 58 | 58 |
| % de particules de diamètre < 1 µm | 23 | 23 | 23 | 23 |
| d50 (µm) | 1,8 | 1,8 | 1,8 | 1,8 |
| Surface spécifique BET (m²/g) | 6,8 | 6,8 | 6,9 | 6,9 |
| Indice de jaune Gardner | 1 à 2 | 1 à 2 | 1 à 2 | 1 à 2 |

Glycérol + PEG désigne une solution aqueuse contenant 75 % (massique) d'un mélange (99 / 1 massique) Glycérol / polyéthylène glycol (de masse moléculaire en poids égale à 600 g/mole - FLUKA™).

Polyglycérol 1 désigne une solution aqueuse contenant 75 % (massique) d'un polyglycérol qui est le Chimexane™ NA (CHIMEX™)

Polyglycérol 2 désigne une solution aqueuse contenant 75 % (massique) d'un polyglycérol qui est le Chimexane™ NL (CHIMEX™)

Glycérol + Polyglycérol 1 désigne une solution aqueuse contenant 75 % (massique) d'un mélange (75 / 25 massique) Glycérol / Polyglycérol (comme celui indiqué ci-dessus)

Il apparaît que les résultats selon les essais n° 5 à 8 sont meilleurs que ceux obtenus selon l'essai n° 2 : augmentation de la capacité de production, diminution de l'énergie spécifique de broyage, diminution de l'énergie spécifique de classification et ce, pour des particules plus fines que selon l'art antérieur (diminution du d50).

## Revendications

1. Utilisation comme agent d'aide au broyage à sec d'une matière minérale choisie parmi les dolomies, le talc, le dioxyde de titane, l'alumine, le kaolin et le carbonate de calcium ayant la fonction de diminuer l'énergie de broyage spécifique et d'augmenter la capacité de broyage, l'indice de couleur Gardner de l'agent d'aide au broyage à sec ayant une valeur inférieure à 3, tel que mesuré selon la méthode Gardner DIN ISO4630/ASTM D 1544 68 exprimée sur une échelle allant de 1 (incolore) à 20 (marron très foncé), de formulations consistant en :
(i) du glycérol, sous forme aqueuse ou pure, ou
(ii) du glycérol avec un ou plusieurs des agents sélectionnés dans le groupe consistant en l'éthylène glycol, le mono-propylène glycol, le triéthylène glycol, un acide inorganique, un sel d'acide inorganique, l'acide formique, l'acide citrique, un sel d'acide formique, un sel d'acide citrique, un polyacide organique, un sel de polyacide organique, une alcanolamine, une polyéthylèneimine, un polymère polyalkylène glycol de masse moléculaire en poids comprise entre 200 g/mol et 20000 g/mol, préférentiellement entre 600 g/mole et 6000 g/mole, un glucide ayant une racine moyenne au carré du rayon de giration égale ou inférieur au rayon modal de la matière minérale et un ou plusieurs poly-glycérols, le ou lesdits agents étant sous forme aqueuse ou pure, ou
(iii) un ou plusieurs poly-glycérols, sous forme aqueuse ou pure ;
et on met en oeuvre de 100 à 5 000 ppm de glycérol ou de poly-glycérol, par rapport au poids sec de ladite matière minérale.

2. Utilisation selon la revendication 1, **caractérisée en ce que** lesdites formulations consistent en du glycérol et de l'eau.

3. Utilisation selon la revendication 2, **caractérisée en ce que** lesdites formulations contiennent de 25 % à 95 %, préférentiellement de 45 % à 90 %, très préférentiellement de 75 % à 85 % en poids de glycérol par rapport à leur poids total, le complément étant constitué par l'eau.

4. Utilisation selon la revendication 1, **caractérisée en ce que** lesdites formulations consistent en du glycérol avec un ou plusieurs desdits agents, sous forme aqueuse ou pure.

5. Utilisation selon la revendication 4, **caractérisée en ce que** ledit agent est un acide inorganique qui est un acide phosphorique.

6. Utilisation selon la revendication 4, **caractérisée en ce que** ledit agent est un ou plusieurs poly-glycérols choisi parmi le di-glycérol, le tri-glycérol, le tétra-glycérol, le penta-glycérol, l'hexa-glycérol, l'hepta-glycérol, l'octa-glycérol, le nona-glycérol ou le déca-glycérol et préférentiellement parmi le di- ou le tri-glycérol.

7. Utilisation selon l'une quelconque des revendications 4 à 6, **caractérisée en ce que** lesdites formulations contiennent de 20 % à 95 % en poids de glycérol, de 1 % à 50 % en poids dudit agent et de 0 % à 65 % en poids d'eau, préférentiellement de 30 % à 90 % en poids de glycérol, de 10 % à 45 % en poids dudit agent et de 0 % à 60 % en poids d'eau, très préférentiellement de 35 % à 75 % en poids de glycérol, de 30 % à 40 % en poids dudit agent et de 5 % à 50 % en poids d'eau par rapport à leur poids total, la somme des pourcentages en poids de glycérol, dudit agent et d'eau étant à chaque fois égale à 100 %.

8. Utilisation selon la revendication 1, **caractérisée en ce que** les formulations consistent en un ou plusieurs poly-glycérols sous forme pure.

9. Utilisation selon la revendication 8, **caractérisée en ce que** le ou les poly-glycérols sont choisis parmi le di-glycérol, le tri-glycérol, le tétra-glycérol, le penta-glycérol, l'hexa-glycérol, l'hepta-glycérol, l'octa-glycérol, le nona-glycérol ou le déca-glycérol et leurs mélanges et préférentiellement parmi le di- ou le tri-glycérol.

10. Utilisation selon larevendication 1, **caractérisée en ce que** lesdites formulations consistent en un ou plusieurs poly-glycérols et de l'eau.

11. Utilisation, selon la revendication 10, **caractérisée en ce que** lesdites formulations contiennent de 25 % à 95 %, préférentiellement de 45 % à 90 %, très préférentiellement de 75 % à 85 % en poids de poly-glycérols par rapport à leur poids total, le complément étant constitué par l'eau.

12. Utilisation selon l'une quelconque des revendications précédentes, **caractérisée en ce qu'**on met en oeuvre de 500 à 3 000 ppm de glycérol ou de poly-glycérol, par rapport au poids sec de ladite matière minérale.

13. Utilisation selon l'une quelconque des revendications précédentes, **caractérisée en ce qu'**on met en oeuvre entre 0,1 et 1 mg, et préférentiellement entre 0,2 et 0,6 mg, équivalent sec total dudit glycérol ou dudit poly-glycérol et tout éventuel agent par m² de matière minérale.

14. Utilisation selon l'une quelconque des revendications précédentes, **caractérisée en ce que** ladite matière minérale est broyée jusqu'à un diamètre moyen, mesuré par un Sedigraph™ 5100, compris entre 0,5 et 10 µm, préférentiellement entre 1 µm et 5 µm.

15. Utilisation selon l'une quelconque des revendications précédentes, **caractérisée en ce que** ladite matière minérale est broyée jusqu'à obtenir un pourcentage en poids de particules ayant un diamètre inférieur à 2 µm, mesuré par un Sedigraph™ 5100, compris entre 20 % et 90 %, préférentiellement entre 30 % et 60 %.

## Patentansprüche

1. Verwendung eines mineralischen Materials, das aus Dolomiten, Talk, Titandioxid, Aluminiumoxid, Kaolin und Calciumcarbonat ausgewählt ist und die Funktion der Verringerung der spezifischen Mahlenergie und der Erhöhung der Mahlkapazität von Formulierungen, bestehend aus:
(i) Glycerin in wässriger oder reiner Form oder
(ii) Glycerin mit einem oder mehreren Mitteln aus der Gruppe bestehend aus Ethylenglykol, Monopropylenglykol, Triethylenglykol, einer anorganischen Säure, einem Salz einer anorganischen Säure, Ameisensäure, Citronensäure, einem Salz von Ameisensäure, einem Salz von Citronensäure, einer organischen Polysäure, einem Salz einer organischen Polysäure, einem Alkanolamin, einem Polyethylenimin, einem Polyalkylenglykolpolymer mit einer gewichtsmittleren Molmasse zwischen 200 g/mol und 20.000 g/mol, bevorzugt zwischen 600 g/mol und 6000 g/mol, einem Kohlenhydrat mit einer mittleren Quadratwurzel des Gyrationsradius kleiner oder gleich dem Modalradius des mineralischen Materials, und einem oder mehreren Polyglycerinen, wobei das Mittel bzw. die Mittel in wässriger oder reiner Form vorliegt bzw. vorliegen, oder
(iii) einem oder mehreren Polyglycerinen in wässriger oder reiner Form,
hat, als Trockenmahlhilfsmittel, wobei der Gardner-Farbindex des Trockenmahlhilfsmittels gemäß Messung nach der Gardner-Methode DIN ISO 4630/ASTM D 1544 68 auf einer Skala von 1 (farblos) bis 20 (sehr dunkles braun) einen Wert von weniger als 3 hat und 100 bis 5000 ppm Glycerin oder Polyglycerin, bezogen auf das Trockengewicht des mineralischen Materials, eingesetzt werden.

2. Verwendung nach Anspruch 1, **dadurch gekennzeichnet, dass** die Formulierungen aus Glycerin und Wasser bestehen.

3. Verwendung nach Anspruch 2, **dadurch gekennzeichnet, dass** die Formulierungen 25 bis 95 Gew.-%, bevorzugt 45 bis 90 Gew.-%, ganz besonders bevorzugt 75 bis 85 Gew.-% Glycerin, bezogen auf ihr Gesamtgewicht, enthalten, wobei der Rest aus Wasser besteht.

4. Verwendung nach Anspruch 1, **dadurch gekennzeichnet, dass** die Formulierungen aus Glycerin mit einem oder mehreren der Mittel in wässriger oder reiner Form bestehen.

5. Verwendung nach Anspruch 4, **dadurch gekennzeichnet, dass** es sich bei dem Mittel um eine anorganische Säure handelt, bei der es sich um eine Phosphorsäure handelt.

6. Verwendung nach Anspruch 4, **dadurch gekennzeichnet, dass** es sich bei dem Mittel um ein oder mehrere Polyglycerine handelt, die aus Diglycerin, Triglycerin, Tetraglycerin, Pentaglycerin, Hexaglycerin, Heptaglycerin, Octaglycerin, Nonaglycerin oder Decaglycerin und bevorzugt aus Di- oder Triglycerin ausgewählt sind.

7. Verwendung nach einem der Ansprüche 4 bis 6, **dadurch gekennzeichnet, dass** die Formulierungen 20 bis 95 Gew.-% Glycerin, 1 bis 50 Gew.-% des Mittels und 0 bis 65 Gew.-% Wasser, bevorzugt 30 bis 90 Gew.-% Glycerin, 10 bis 45 Gew.-% des Mittels und 0 bis 60 Gew.-% Wasser, ganz besonders bevorzugt 35 bis 75 Gew.-% Glycerin, 30 bis 40 Gew.-% des Mittels und 5 bis 50 Gew.-% Wasser, bezogen auf ihr Gesamtgewicht, enthalten, wobei die Summe der Gewichtsprozentanteile von Glycerin, dem Mittel und Wasser jeweils gleich 100 % ist.

8. Verwendung nach Anspruch 1, **dadurch gekennzeichnet, dass** die Formulierungen aus einem oder mehreren Polyglycerinen in reiner Form bestehen.

9. Verwendung nach Anspruch 8, **dadurch gekennzeichnet, dass** die Polyglycerine aus Diglycerin, Triglycerin, Tetraglycerin, Pentaglycerin, Hexaglycerin, Heptaglycerin, Octaglycerin, Nonaglycerin oder Decaglycerin und deren Mischungen und bevorzugt aus Di- oder Triglycerin ausgewählt sind.

10. Verwendung nach Anspruch 1, **dadurch gekennzeichnet, dass** die Formulierungen aus einem oder mehreren Polyglycerinen und Wasser bestehen.

11. Verwendung nach Anspruch 10, **dadurch gekennzeichnet, dass** die Formulierungen 25 bis 95 Gew.-%, bevorzugt 45 bis 90 Gew.-%, ganz besonders bevorzugt 75 bis 85 Gew.-% Polyglycerine, bezogen auf ihr Gesamtgewicht, enthalten, wobei der Rest aus Wasser besteht.

12. Verwendung nach einem der vorhergehenden Ansprüche, **dadurch gekennzeichnet, dass** 500 bis 3000 ppm Glycerin oder Polyglycerin, bezogen auf das Trockengewicht des mineralischen Materials, eingesetzt werden.

13. Verwendung nach einem der vorhergehenden Ansprüche, **dadurch gekennzeichnet, dass** zwischen 0,1 und 1 mg und bevorzugt zwischen 0,2 und 0,6 mg Gesamttrockenäquivalent des Glycerins oder des Polyglycerins und jeglichen anderen Mittels pro m² des mineralischen Materials eingesetzt werden.

14. Verwendung nach einem der vorhergehenden Ansprüche, **dadurch gekennzeichnet, dass** das mineralische Material bis zu einem mit einem Sedigraph™ 5100 gemessenen mittleren Durchmesser zwischen 0,5 und 10 µm, bevorzugt zwischen 1 µm und 5 µm, gemahlen wird.

15. Verwendung nach einem der vorhergehenden Ansprüche, **dadurch gekennzeichnet, dass** das mineralische Material bis zum Erhalt eines Gewichtsprozentanteils von Teilchen mit einem mit einem Sedigraph™ 5100 gemessenen mittleren Durchmesser von weniger als 2 µm zwischen 20 % und 90 %, bevorzugt zwischen 30 % und 60 %, gemahlen wird.

## Claims

1. An use, as a dry grinding aid agent of a mineral matter chosen from among the dolomites, talc, titanium dioxide, alumina, kaolin and calcium carbonate, the function of which is to reduce the specific grinding energy and to increase the grinding capacity, the Gardner colour index of the dry grinding aid agent having a value of less than 3, as measured according to the Gardner DIN ISO4630/ASTM D 1544 68 method expressed on a scale from 1 (colourless) to 20 (very dark brown), of formulations consisting of:
(i) glycerol, in the aqueous or pure form, or
(ii) glycerol with one or more of the agents selected in the group consisting in ethylene glycol, monopropylene glycol, triethylene glycol, an inorganic acid, an inorganic acid salt, formic acid, citric acid, a formic acid salt, a citric acid salt, an organic polyacid, an organic polyacid salt, an alcanolamine, a poly(ethylene imine), a polyalkylene glycol polymer of molecular mass by weight of between 200 g/mole and 20,000 g/mole, preferentially between 600 g/mole and 6,000 g/mole, a carbohydrate having a root mean square of the radius of gyration equal to or less than the modal radius of the mineral matter and one or more polyglycerols, said agent or agents being in the aqueous or pure form, or
(iii) one or more polyglycerols in the aqueous or pure form;
and, from 100 to 5,000 ppm of glycerol or of polyglycerol relative to the dry weight of said mineral matter, are used.

2. The use according to claim 1, **characterised in that** said formulations consist of glycerol and water.

3. The use according to claim 2, **characterised in that** said formulations contain from 25% to 95%, preferentially from 45% to 90%, and very preferentially from 75% to 85% by weight of glycerol relative to their total weight, the remainder consisting of water.

4. The use according to claim 1, **characterised in that** said formulations consist of glycerol with one or more of said agents, in the aqueous or pure form.

5. The use according to claim 4, **characterised in that** said agent is an inorganic acid which is a phosphoric acid.

6. The use according to claim 4, **characterised in that** said agent is one or more polyglycerols chosen from among di-glycerol, tri-glycerol, tetra-glycerol, penta-glycerol, hexa-glycerol, hepta-glycerol, octa-glycerol, nona-glycerol or deca-glycerol and preferentially from among di- or tri-glycerol.

7. The use according to any one of the claims 4 to 6, **characterised in that** said formulations contain from 20% to 95% by weight of glycerol, from 1% to 50% by weight of said agent and from 0% to 65% by weight of water, preferentially from 30% to 90% by weight of glycerol, from 10% to 45% by weight of said agent and from 0% to 60% by weight of water, very preferentially from 35% to 75% by weight of glycerol, from 30% to 40% by weight of said agent and from 5% to 50% by weight of water, relative to their total weight, the sum of the percentages by weight of glycerol, of said agent and of water being, in each case, equal to 100%.

8. The use according to claim 1, **characterised in that** the formulations consist of one or more polyglycerols in the pure form.

9. The use according to claim 8, **characterised in that** the polyglycerol or polyglycerols are chosen from among di-glycerol, tri-glycerol, tetra-glycerol, penta-glycerol, hexa-glycerol, hepta-glycerol, octa-glycerol, nona-glycerol or deca-glycerol and their mixtures, and preferentially from among di- or tri-glycerol.

10. The use according to claim 1, **characterised in that** said formulations consist of one or more polyglycerols and water.

11. The use according to claim 10, **characterised in that** said formulations contain from 25% to 95%, preferentially from 45% to 90%, and very preferentially from 75% to 85%, by weight of polyglycerols relative to their total weight, the remainder consisting of water.

12. The use according to any one of the preceding claims, **characterised in that** use is made of 500 to 3,000 ppm of glycerol or polyglycerol, relative to the dry weight of said mineral matter.

13. The use according to any one of the preceding claims, **characterised in that** use is made of between 0.1 and 1 mg, and preferentially between 0.2 and 0.6 mg, total dry equivalent of said glycerol or said polyglycerol and every possible agent for each m² of mineral matter.

14. The use according to any one of the preceding claims, **characterised in that** said mineral matter is ground until an average diameter, measured by a Sedigraph™ 5100, of between 0.5 and 10 µm, and preferentially between 1 µm and 5 µm, is obtained.

15. The use according to any one of the preceding claims, **characterised in that** said mineral matter is ground until a percentage by weight of particles with a diameter of less than 2 µm, measured by a Sedigraph™ 5100, of between 20% and 90%, and preferentially between 30% and 60%, is obtained.
